# EUROPÄISCHE PATENTSCHRIFT

(11) **EP 0 469 333 B1**
(45) Veröffentlichungstag und Bekanntmachung des Hinweises auf die Patenterteilung: **16.03.1994**
(21) Anmeldenummer: 91111199.5
(22) Anmeldetag: 05.07.1991
(51) Int. Cl.: B60R 25/10

(54) **Kraftfahrzeug mit einer Zentralverriegelungsanlage und einer Diebstahl-Alarmanlage**
Motor vehicle with a central locking device and an anti-theft alarm system
Automobile avec un système de verrouillage central et d'alarme anti-vol

(30) Priorität: 31.07.1990 DE 4024224
(43) Veröffentlichungstag der Anmeldung: 05.02.1992
(73) Patentinhaber: Dr.Ing.h.c. F. Porsche Aktiengesellschaft, 70435 Stuttgart (DE)
(72) Erfinder: Bechtle, Rolf, W-7120 Bietigheim-Bissingen (DE)

(56) Entgegenhaltungen:
- DE-U- 8 714 628
- DE-U- 8 810 641
- US-A- 4 574 268
- US-A- 4 754 255
- ATZ AUTOMOBILTECHNISCHE ZEITSCHRIFT Bd. 91, Nr. 6, Juni 1989, STUTTGART Seiten 309 - 318; GUNTRAM HUBER: 'DER NEUE MERCEDES-BENZ ROADSTER '
- PATENT ABSTRACTS OF JAPAN vol. 9, no. 183 (M-400)(1906) 30. Juli 1985 & JP-A-60 50 050 (NISSAN JIDOSHA K.K. ) 19. März 1985

## Beschreibung

Die Erfindung betrifft ein Kraftfahrzeug mit einer Zentralveriegelungsanlage und einer Diebstahl-Alarmanlage.

Ein Kraftfahrzeug mit einem verschließbaren und verriegelbaren Gepäckraum und wenigstens zwei Türen, welche durch eine Zentralverriegelungsanlage über eine Schloßbetätigung mittels schlüsselbetätigter Schlösser selbsttätig ver- bzw. entriegelbar sind, geht aus der DE-U-8810 641 U1 hervor. Die Zentralverriegelungsanlage wird mittels einer ersten Gruppe von Schaltkontakten an den Schlössern angesteuert. Eine Diebstahl-Alarmanlage überwacht einen Zugang zum Innenraum des Kraftfahrzeugs. Eine Alarmbereitschaft der Diebstahl-Alarmanlage wird durch die Schaltkontakte der ersten Gruppe von Schaltkontakten beim Verriegeln aktiviert und beim Entriegeln deaktiviert. Mittels zweiten Schaltkontakten, welche einen Zugang zum Fahrzeug oder dessen unerlaubte Benützung registrieren, erfolgt schließlich das Auslösen eines Alarms durch die alarmbereite Diebstahl-Alarmanlage.

Mit der DE- 38 21 561 Al ist eine Vorrichtung zur optischen Anzeige der Bereitschaft einer Fahrzeug-Alarmanlage bekannt geworden. Hierzu ist in wenigstens einem Verriegelungsknopf eines Schlosses einer Fahrzeugtür ein elektro-optisches Anzeigeelement eingesetzt, das bei alarmbereit geschalteter Diebstahl-Alarmanlage ein Blinksignal erzeugt. Das als Leuchtdiode ausgeführte Anzeigeelement wird im Impulsbetrieb mit einer im Verhältnis zum Blinkimpuls relativ langen Impulspause betrieben.

Weiter ist aus der US-A-4 754 225 eine benutzeridentifizierende Steuer- und Sicherungseinrichtung für ein Fahrzeug bekannt geworden. Hierbei ist eine Alarmanlage für ein Fahrzeug offenbart, die mittels einer Fernbedienungeneinheit betätigbar ist. Ebenso kann eine im Fahrzeug angeordnete Zentralverriegelungsanlage ebenfalls mittels der Fernbedienungseinheit betätigt werden. Die Alarmanlage überwacht den Öffnungszustand von Motorhaube, Kofferraum und Fahrzeugtüren sowie das Fahrzeug auf Stöße, Bewegungen oder Glasbruch.

Da sowohl die Zentralverriegelungsanlage als auch die Diebstahl-Alarmanlage teilweise von denselben Schaltkontakten gesteuert werden, ist ein relativ hoher Verdrahtungsaufwand notwendig. Auch ist es bei dem oben genannten System möglich, daß bei einer Fehlfunktion oder einer teilweisen Fehlfunktion der Zentralverriegelungsanlage die Alarmanlage und deren Funktionsanzeige dennoch aktiviert wird, obwohl möglicherweise eine oder mehrere Türen oder sonstige Öffnungen des Kraftfahrzeugs nicht ordnungsgemäß verschlossen sind.

Es ist daher Aufgabe der Erfindung, ein Kraftfahrzeug mit einer Zentralverriegelungsanlage und einer Diebstahl-Alarmanlage zu schaffen, bei dem der Verdrahtungsaufwand beider Anlagen verringert ist und eine unbewußte Aktivierung der Alarmanlage bei einer Fehlfunktion der Zentralverriegelungsanlage vermieden wird.

Die Aufgabe ist durch die Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß durch die Verwendung eines gemeinsamen Steuergeräts für die Zentralverriegelungsanlage und die Diebstahl-Alarmanlage und die Benutzung gemeinsamer Schaltkontakte der Verdrahtungsaufwand verringert wird; der Verriegelungszustand und der Entriegelungszustand aller Türen und des Gepäckraumdeckels wird durch das Steuergerät mittels einer weiteren Gruppe von Schaltkontakten überwacht. Bei Erkennen eines nach wenigstens einer Schlüsselbetätigung eines Schlosses in Verriegelungsrichtung ausbleibenden, den Verriegelungszustand charakterisierenden Signals dieser Schaltkontakte, wird eine Aktivierung der Alarmanlage unterbunden und ein entsprechendes Warnsignal über die Leuchtdioden in den Türknöpfen abgegeben.

In weiterer Ausgestaltung der Erfindung ist eine Aktivierung der Alarmanlage in einem derartigen Fall dennoch möglich. Ebenso kann nach einem manuellen Verriegeln aller Türen die Alarmanlage durch eine Beätigung des schlüsselbetätigten Schlosses in Verriegelungsrichtung aktiviert werden.

Die Erfindung ist beispielhaft anhand einer Zeichnung nachstehend näher erläutert.

Die einzige Figur zeigt ein Blockschaltbild einer Zentralverriegelungsanlage und einer Diebstahl-Alarmanlage mit einem beiden Anlagen gemeinsamen Steuergerät.

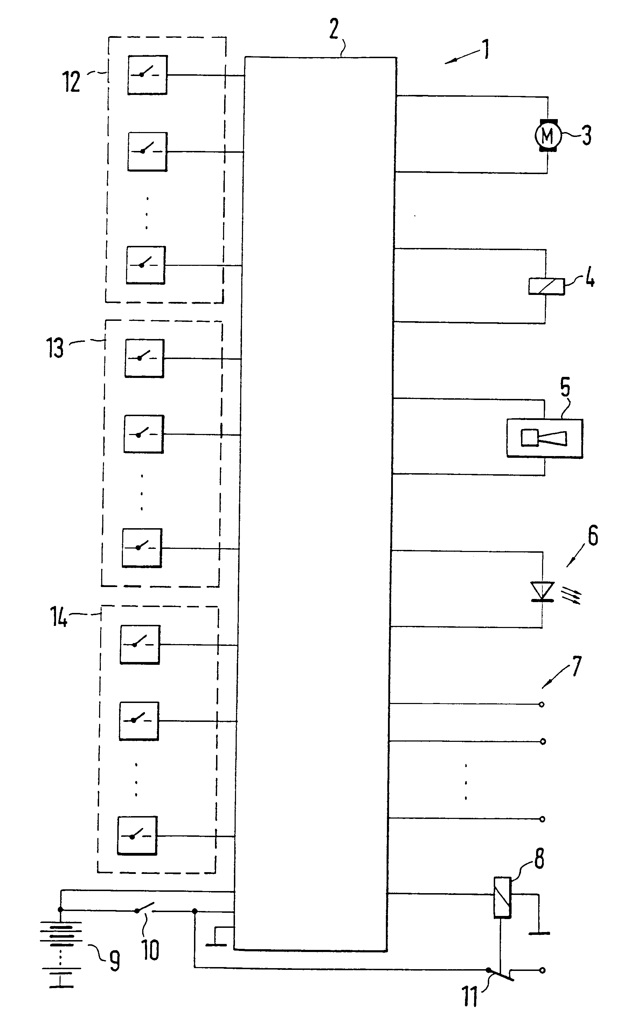

In Fig. 1 ist mit 1 eine Zentralverriegelungsanlage und eine Diebstahl- Alarmanlage gezeigt. Ein beiden Anlagen gemeinsames Steuergerät 2 steuert ein oder mehrere Elektromotoren 3 und/oder Elektromagnete 4 an, welche der elektromechanischen oder elektropneumatischen Verriegelung bzw. Entriegelung der Schlösser in den Türen und Deckel (Gepäckraumdeckel, Tankdeckel, Motorhaube usw.) dienen. Vom Alarmanlagenteil werden ein oder mehrere Meldeorgane 5, wie z. B. eine Fahrzeughupe oder die Scheinwerfer oder Blinker des Kraftfahrzeugs angesteuert. Elektro-optische Anzeigeelemente, die bevorzugt als Leuchtdioden ausgeführt und in den Verriegelungsknöpfen der Fahrzeugtüren angeordnet sind, zeigen den Zustand der gesamten Anlage an.

Über weitere, vom Steuergerät 2 gesteuerte Ausgänge 7 können bei alarmbereiter Alarmanlage zusätzliche externe Überwachungselemente, beispielsweise zur Ultraschallüberwachung des Fahrzeuginnenraums (Bewegungsmelder) oder zum Feststellen, ob das Fahrzeug von einem Standort wegbewegt wird, aktiv gesteuert werden.

Schließlich dient noch ein vom Steuergerät angesteuertes Relais 8 der Wegfahrsicherung des Kraftfahrzeugs, in dem bei alarmbereit geschalteter Alarmanlage beim Einschalten des Zündstroms von einer Fahrzeugbatterie 9, beispielsweise über einen Zündschalter 10, der Zündstrom mittels eines Öffners 11 des Relais 8 unterbrochen wird; aufgrund dessen ist das Signal vom Zündschalter 10 eine Eingangsgröße des Steuergeräts 2.

Selbstverständlich wird das Steuergerät über die Fahrzeugbatterie 9 mit Strom versorgt. Zu Pufferzwecken kann ferner im Steuergerät 2 ein nicht gezeigter Akkumulator vorgesehen sein.

Eine erste Gruppe von Schaltkontakten 12 ist den schlüsselbetätigten Schlössern in wenigstens einem Paar der Fahrzeugtüren zugeordnet. Jeweils einer der Schaltkontakte der ersten Gruppe 12 wird beim Verriegeln der Schlösser und jeweils einer beim Entriegeln der Schlösser betätigt (aktivgesteuert). Durch das Aktivsteuern dieser Schaltkontakte erfolgt schließlich die Ansteuerung der Elektromotoren 3 bzw. Elektromagneten 4 zum Verriegeln bzw. Entriegeln der Fahrzeugzugänge. Ebenso kann mittels dieser ersten Gruppe von Schaltkontakten die Alarmbereitschaft der Diebstahl-Alarmanlage beim Verriegeln aktiviert und beim Entriegeln deaktiviert werden.

Eine zweite Gruppe von Schaltkontakten 13 dient der Überwachung des Zugangs zum Fahrzeug oder dessen unerlaubter Benutzung bei alarmbereit geschalteter Diebstahl-Alarmanlage. Mit diesen Schaltkontakten der zweiten Gruppe 13 werden insbesondere die Türen, der Kofferdeckel, die Motorhaube, ein Tankdeckel, ein Deckel eines Handschuhfachs, ein korrekter Einbau des Autoradios oder ein Öffnen eines beweglichen Dachteils oder (mittels der zusätzlichen, externen Überwachungselemente) Bewegungen des Fahrzeugs selbst oder von Gegenständen im Fahrzeug erfaßt. Das Auslösen der Alarmanlage und damit das Ansteuern der Meldeorgane 5 geschieht hierbei durch Überführen eines dieser Schaltkontakte der zweiten Gruppe 13 von einem inaktiven in den aktiven Zustand, beispielsweise durch Öffnen einer Fahrzeugtür. Hierzu können z. B. Türschalter für die Fahrzeuginnenbeleuchtung herangezogen werden.

Da jedoch die erste Gruppe von Schaltkontakten 12 lediglich das Ansteuern der Zentralverriegelungsanlage bewirkt und nicht auch deren korrekte Funktion überwachen kann (die Schaltkontakte sind als Tastschalter ausgeführt), ist eine dritte Gruppe von Schaltkontakten 14 vorgesehen, welche den Verriegelungszustand und den Entriegelungszustand aller Türen und Deckel des Kraftfahrzeugs bzw. deren Schlösser überwachen. Bleibt ein derartiges Erkennen des den Verriegelungszustand charakterisierenden Signals des oder der Schaltkontakte der dritte Gruppe 14 nach wenigstens einer Schlüsselbetätigung eines Schlosses in Verriegelungsrichtung durch einen der Schaltkontakte der ersten Gruppe 12 aus, so wird eine Aktivierung der Alarmanlage unterbunden und ein entsprechendes Warnsignal über die elektro-optischen Anzeigeelemente 6 in den Verriegelungsknöpfen abgegeben.

Bleibt das den Verriegelungszustand charakterisierende Signal wenigstens eines Schaltkontakts der dritten Gruppe 14 nach dem Erkennen einer Schlüsselbetätigung eines Schlosses in Verriegelungsrichtung durch einen Schaltkontakt der ersten Gruppe 12 aus, so kann die Aktivierung der Alarmanlage durch eine bestimmte Anzahl von (drei) Betätigungen des schlüsselbetätigten Schlosses innerhalb eines bestimmten, begrenzten Zeitraums in Verriegelungsrichtung auch bei wenigstens einer unverriegelten oder unverriegelbaren oder manuell verriegelten Fahrzeugtür ermöglicht werden.

Ebenso ist es möglich, nach dem manuellen Verriegeln aller Türen die Alarmbereitschaft der Alarmanlage durch eine Betätigung des schlüsselbetätigten Schlosses in Verriegelungsrichtung, zu aktivieren, sofern der Verriegelungszustand aller Türen durch die Schaltkontakte der dritten Gruppe 14 erkannt wird.

Die Zentralverriegelungs- und Alarmanlage umfaßt ferner eine ganze Reihe weiterer Funktionen, die nachstehend erläutert werden sollen.

So kann z. B. nach Ablauf einer Ruhezeit nach Aktivieren der Alarmanlage ein Auslösen der Alarmanlage durch lediglich diejenigen Schaltkontakte der zweiten Gruppe 13 erfolgen, die während der ganzen Ruhezeit inaktiv waren (Türen geschlossen). Die übrigen Schaltkontakte können die Alarmanlage erst nach dem Übergang in den inaktiven Zustand bzw. nach einer danach gestarteten Ruhezeit auslösen.

Wird während einer Ruhezeit nach Aktivieren der Alarmanlage das Zündschloß 10 des Kraftfahrzeugs betätigt, so wird die Alarmanlage deaktiviert. Bei Betätigen des Zündschlosses 10 des Kraftfahrzeugs nach Ablauf der Ruhezeit wird der Zündstrom zu einer Brennkraftmaschine des Kraftfahrzeugs mittels des Relais 8 und des Öffners 11 unterbrochen und Alarm ausgelöst (Wegfahrsicherung).

Mit dem Betätigen eines den Gepäckraum des Kraftfahrzeugs verschließenden Schlosses in Entriegelungsrichtung wird eine bereits aktivierte Alarmanlage zumindest solange deaktiviert, wie der entsprechende den geöffneten Gepäckraum überwachende Schaltkontakt der zweiten Gruppe aktiv ist.

Schließlich kann ein externes Zusatzgerät zur Überwachung des Kraftfahrzeugs auf Bewegungen des Fahrzeugs selbst oder Bewegungen im Fahrzeug über die Ausgänge 7 mit der Alarmanlage bzw. nach einer Ruhezeit aktiviert werden, sofern während der gesamten Ruhezeit alle Schaltkontakte der zweiten Gruppe 13 inaktiv waren oder nachdem nach Übergang aller Schaltkontakt der zweiten Gruppe 13 in den inaktiven Zustand die Ruhezeit erneut verstrichen ist. Mit dem Deaktivieren der Alarmbereitschaft wird auch das externe Zusatzgerät abgechaltet.

Schließlich kann noch über die dritte Gruppe von Schaltkontakten 14 der Versuch eines Entriegelns der Tür bei aktivierter Alarmanlage überprüft und die Alarmanlage ausgelöst werden.

Einige weitere Funktionen betreffen die Zentralverriegelungsanlage: Wird bei geöffneter Fahrertür versucht, die Zentralverriegelungsanlage in Verriegelungsrichtung zu betätigen, so wird die Zentralverriegelungsanlage entriegelt. Ebenso kann eine Überlastsicherung vorgesehen sein, die ein häufiges Betätigen der Zentralverriegelung innerhalb einer bestimmten Zeit zuläßt und dann weitere Betätigungen zumindest für eine bestimmte Zeit verhindert. Hierbei ist jedoch gegeben, daß die Zentralverriegelungsanlage letztmalig entriegelt werden kann.

Es kann vorgesehen sein, daß das gemeinsame Steuergerät eine Selbstdiagnosefunktion aufweist, die nach Aktivieren der Alarmanlage deren gesamte Funktionstüchtigkeit prüft. Fehler in der Zentralverriegelungs- oder Alarmanlage bzw. ausgelöste Alarme werden unter Erfassung der Randbedingungen bei ihrem Entstehen in einem Fehlerspeicher des Steuergeräts abgelegt. Ebenfalls im Fehlerspeicher notiert wird, wenn die Alarmanlage nur durch mehrmaliges Betätigen des schlüsselbetätigten Schlosses innerhalb eines bestimmten Zeitraums in Verriegelungsrichtung aktiviert werden konnte.

Schließlich ist vorgesehen, den Betriebszustand der Zentralverriegelungs- und Alarmanlage durch die Leuchtdioden in den Verriegelungsknöpfen anzuzeigen. Zur Kennzeichnung des jeweiligen Betriebszustandes werden die Leuchtdioden mit unterschiedlichen bzw. unterscheidbaren Blinksignalen angesteuert.

Das opto-elektronische Anzeigeelement wird beispielsweise nicht angesteuert, wenn die Selbstdiagnose während der Ruhezeit Fehler erkennt oder bei fehlerloser Selbstdiagnose während der Ruhezeit die Zentralverriegelungsanlage nicht zu schließen ist und das schlüsselbetätigte Schloß nicht drei Mal innerhalb einer bestimmten Zeit in Verriegelungsrichtung betätigt wurde oder wenn aktive Schaltkontakte der zweiten Gruppe 13 beispielsweise geöffnete Fahrzeugtüren anzeigen.

Bei korrekter Funktion der Anlage blinken die elektro-optischen Anzeigeelemente während der Ruhezeit schnell.

Wenn bei korrekter Funktion der Anlage die Ruhezeit abgelaufen ist und alle Schaltkontakte der zweiten Gruppe 13 inaktiv sind, die Zentralverriegelung geschlossen ist und nicht dreimal kurz hintereinander abgeschlossen wurde und kein Alarm vorliegt, blinken die elektro-optischen Anzeigeelemente mit einer normalen Blinksequenz, bei der die Einschaltzeiten relativ kurz im Verhältnis zu den Ausschaltzeiten sind. Die Alarmbereitschaft der Diebstahl-Alarmanlage ist dann aktiviert.

Wurde die Zentralverriegelungsanlage kurzzeitig dreimal verriegelt, ohne daß während der Ruhezeit ein Fehler erkannt wurde, so wird über das elektro-optische Anzeigeelement ein doppeltes Blinksignal ausgegeben, bei dem diese zweimal kurz hintereinander, gefolgt von einer längeren Blinkimpulspause, angesteuert werden; die Alarmbereitschaft ist nicht aktiviert. Nach Ablauf der Ruhezeit wird die Alarmbereitschaft aktiviert, jedoch weiterhin das doppelte Blinksignal ausgegeben. Hierdurch wird angezeigt, daß entweder eine Tür nicht verriegelt ist oder das entsprechende Signal der dritten Gruppe von Schaltkontakten fehlt.

Ebenso erfolgt doppeltes Blinken, wenn nach Ablauf der Ruhezeit Schaltkontakte der zweiten Gruppe 13 aktiv sind und somit beispielsweise eine geöffnete Fahrzeugtür anzeigen. Schließlich erfolgt das doppelte Blinken während bzw. nach einer Alarmgabe.

## Patentansprüche

1. Kraftfahrzeug mit wenigstens zwei Türen und einem verschließbaren und verriegelbaren Gepäckraum, wobei die Türen mittels einer Zentralverriegelungsanlage über eine Schloßbetätigung mittels schlüsselbetätigter Schlösser in einem Paar Türen selbsttätig ver- bzw. entriegelbar sind und die Zentralverriegelungsanlage mittels einer ersten Gruppe von Schaltkontakten (12) an den Schlössern angesteuert werden und ein Zugang zum Innenraum des Kraftfahrzeugs mittels einer Diebstahl-Alarmanlage überwacht wird, wobei eine Alarmbereitschaft der Diebstahl- Alarmanlage durch die Schaltkontakte der ersten Gruppe von Schaltkontakten (12) beim Verriegeln aktiviert und beim Entriegeln deaktiviert werden kann, und das Auslösen eines Alarms durch die alarmbereite Diebstahl-Alarmanlage durch wenigstens einen von seinem inaktiven in den aktiven Zustand überführten Schaltkontakt von den Zugang zum Fahrzeug oder dessen unerlaubte Benutzung registrierenden Gruppe von zweiten Schaltkontakten (13) erfolgt, und die Alarmbereitschaft der Diebstahl-Alarmanlage durch ein elektro-optisches Anzeigeelement (6) in den Verriegelungsknöpfen durch Blinken angezeigt wird,
**dadurch gekennzeichnet**, daß
- die Zentralverriegelungsanlage und die Diebstahl- Alarmanlage (1) durch ein beiden Anlagen gemeinsames Steuergerät (2) gesteuert werden,
- eine dritte Gruppe von Schaltkontakten (14) den Verriegelungszustand aller Schlösser oder Türen und des Gepäckraumdeckels überwacht und ein den Verriegelungszustand anzeigendes Signal abgibt,
- das Steuergerät (2) durch Auswerten der Signale der dritten Gruppe von Schaltkontakten (14) den Betriebszustand der Zentralverriegelungsanlage ermittelt, und
- das Steuergerät (2), wenn nach wenigstens einer Schlüsselbetätigung eines Schlosses in Verriegelungsrichtung zumindest ein Schaltkontakt der dritten Gruppe von Schaltkontakten (14) kein den Verriegelungszustand anzeigendes Signal abgibt,
- die Aktivierung der Alarmanlage (1) unterbindet und gleichzeitig
- über die elektro-optischen Anzeigeelemente (6) ein entsprechendes Warnsignal abgibt.

2. Kraftfahrzeug nach Anspruch 1, **dadurch gekennzeichnet**, daß nach dem Erkennen wenigstens eines nach wenigstens einer Schlüsselbetätigung eines Schlosses in Verriegelungsrichtung ausbleibenden, den Verriegelungszustand charakterisierenden Signals des oder der Schaltkontakte der dritten Gruppe von Schaltkontakten (14) die Aktivierung der Alarmanlage durch eine bestimmte Anzahl von Betätigungen des schlüsselbetätigten Schlosses innerhalb eines bestimmten, begrenzten Zeitraums in Verriegelungsrichtung auch bei wenigstens einer unverriegelten oder unverriegelbaren oder manuell verriegelten Fahrzeugtür ermöglicht wird.

3. Kraftfahrzeug nach Anspruch 1 oder 2, **dadurch gekennzeichnet**, daß nach manuellem Verriegeln aller Türen und Vorhandensein der den Verriegelungszustand aller Türen charakterisierenden Signale der dritten Gruppe von Schaltkontakten (14) die Aktivierung der Alarmanlage durch eine Betätigung des schlüsselbetätigten Schlosses in Verriegelungsrichtung ermöglicht wird.

4. Kraftfahrzeug nach Anspruch 1, 2 oder 3, **dadurch gekennzeichnet**, daß nach einem Ablauf einer Ruhezeit nach Aktivieren der Alarmanlage ein Auslösen der Alarmanlage durch lediglich diejenigen Schaltkontakte der zweiten Gruppe von Schaltkontakten (13) möglich ist, die während der ganzen Ruhezeit inaktiv waren, während die aktiven Schaltkontakte die Alarmanlage jeweils erst nach dem Übergang in den inaktiven Zustand bzw. nach Ablauf einer nach Übergang in den inaktiven Zustand gestarteten Ruhezeit auslösen können.

5. Kraftfahrzeug nach wenigstens einem der vorangehenden Ansprüche, **dadurch** **gekennzeichnet**, daß bei Betätigen eines Zündschlosses (10) des Kraftfahrzeugs vor Ablauf der Ruhezeit die Alarmanlage deaktiviert wird.

6. Kraftfahrzeug nach wenigstens einem der vorangehenden Ansprüche, **dadurch** **gekennzeichnet**, daß bei Betätigen des Zündschlosses (10) des Kraftfahrzeugs nach Ablauf der Ruhezeit der Zündstrom zu einer Brennkraftmaschine des Kraftfahrzeugs unterbrochen (8, 11) und Alarm ausgelöst wird.

7. Kraftfahrzeug nach wenigstens einem der vorangehenden Ansprüche, **dadurch** **gekennzeichnet**, daß mit dem Betätigen eines den Gepäckraum des Kraftfahrzeugs verschließenden Schlosses in Entriegelungsrichtung eine bereits aktivierte Alarmanlage zumindest so lange deaktiviert bleibt, wie der entsprechende Schaltkontakt der zweiten Gruppe (13) aktiv ist.

8. Kraftfahrzeug nach wenigstens einem der vorangehenden Ansprüche, **dadurch** **gekennzeichnet**, daß ein externes Zusatzgerät zur Überwachung des Kraftfahrzeugs aktiv gesteuert wird, sofern die Alarmanlage aktiviert ist und während der gesamten Ruhezeit alle Schaltkontakte der zweiten Gruppe von Schaltkontakten (13) inaktiv waren oder nachdem nach Übergang aller Schaltkontakte der zweiten Gruppe (13) in den inaktiven Zustand die Ruhezeit erneut verstrichen ist.

9. Kraftfahrzeug nach wenigstens einem der vorangehenden Ansprüche, **dadurch** **gekennzeichnet**, daß das gemeinsame Steuergerät (2) eine Selbstdiagnosefunktion hat, die nach Aktivieren der Alarmanlage deren Funktionstüchtigkeit prüft.

10. Kraftfahrzeug nach Anspruch 9, **dadurch gekennzeichnet**, daß Fehler in der Alarmanlage und ausgelöste Alarme unter Erfassung der Randbedingungen in einem Fehlerspeicher des Steuergeräts (2) abgelegt werden.

11. Kraftfahrzeug nach Anspruch 9 oder 10, **dadurch gekennzeichnet**, daß der Betriebszustand der Alarmanlage durch die Leuchtdioden in den Verriegelungsknöpfen angezeigt wird und zur Kennzeichnung des jeweiligen Betriebszustands die elektro-optischen Anzeigeelemente (8) mit unterschiedlichen Blinksignalen angesteuert werden.

## Claims

1. A motor vehicle with at least two doors and a closable and lockable boot, wherein the doors can be automatically locked and unlocked by means of a central locking device by lock actuation by means of key-actuated locks in a pair of doors and the central locking device [is] actuated by means of a first group of switching contacts (12) on the locks and access to the interior of the motor vehicle is monitored by means of an antitheft alarm device, wherein the armed state of the anti-theft alarm device can be activated during locking by the switching contacts of the first group of switching contacts (12) and can be de-activated during unlocking, and an alarm is triggered by the armed anti-theft alarm device by at least one switching contact switched from its inactive to its active state from [the] group of second switching contacts (13) registering the access to the vehicle or unauthorized use thereof, and the armed state of the anti-theft alarm device is displayed by winking by an electro-optical display device (6) in the locking buttons,
**characterized in that**
- the central locking device and the anti-theft alarm device (1) are controlled by a control device (2) common to both devices,
- a third group of switching contacts (14) monitors the locking state of all the locks or doors and the boot cover and emits a signal displaying the locking state,
- the control device (2) determines the operating state of the central locking device by evaluating the signals of the third group of switching contacts (14), and
- if at least one switching contact of the third group of switching contacts (14) does not emit a signal displaying the locking state after at least one key-actuation of a lock in the locking direction,
- the control device (2) prevents the activation of the alarm device (1) and at the same time
- emits a suitable warning signal by way of the electro-optical display devices (6).

2. A motor vehicle according to Claim 1, **characterized** **in that** after the recognition of at least one signal - absent after at least one key-actuation of a lock and characterizing the locking state - of the switching contact or contacts of the third group of switching contacts (14) the activation of the alarm device is made possible by a specific number of actuations of the key-actuated lock within a specific, limited period in the locking direction even with at least one unlocked or unlockable or manually locked vehicle door.

3. A motor vehicle according to Claim 1 or 2, **characterized in that** after locking all the doors manually and with the presence of the signals of the third group of switching contacts (14) characterizing the locking state of all the doors the activation of the alarm device is made possible by actuating the key-actuated lock in the locking direction.

4. A motor vehicle according to Claim 1, 2 or 3, **characterized in that** after a rest period has elapsed after activating the alarm device, the alarm device can be triggered by only those switching contacts of the second group of switching contacts (13) which were inactive during the entire rest period, while the active switching contacts can trigger the alarm device only after switching to the inactive state or after a rest period started after switching to the inactive state has elapsed.

5. A motor vehicle according to at least one of the preceding Claims, **characterized in** **that** the alarm device is de-activated when an ignition lock (10) of the motor vehicle is actuated before the expiry of the rest period.

6. A motor vehicle according to at least one of the preceding Claims, **characterized in** **that** when the ignition lock (10) of the motor vehicle is actuated before the expiry of the rest period and the alarm is triggered the ignition current to an internal-combustion engine of the motor vehicle is interrupted (8, 11).

7. A motor vehicle according to at least one of the preceding Claims, **characterized in** **that** when a lock closing the boot of the motor vehicle is actuated in the unlocking direction an alarm device already activated remains de-activated at least as long as the corresponding switching contact of the second group (13) is active.

8. A motor vehicle according to at least one of the preceding Claims, **characterized in** **that** an external additional device for monitoring the motor vehicle is actively controlled when the alarm device is activated and during the entire rest period all the switching contacts of the second group of switching contacts (13) [are] inactive or after the rest period has again elapsed after switching all the switching contacts of the second group (13) into the inactive state.

9. A motor vehicle according to at least one of the preceding Claims, **characterized in** **that** the common control device (2) has a self-diagnosis function which tests the operational capability of the alarm device after it is activated.

10. A motor vehicle according to Claim 9, **characterized in that** errors in the alarm device and triggered alarms are set aside while detecting the marginal conditions in an error store in the control device (2).

11. A motor vehicle according to Claim 9 or 10, **characterized in that** the operating state of the alarm device is displayed by light-emitting diodes in the locking buttons, and the electro-optical display devices (8) with different winking signals are actuated in order to characterize the respective operating state.

## Revendications

1. Véhicule automobile comportant au moins deux portes et un coffre à bagages pouvant être fermé à clé et verrouillé, les deux portes pouvant être automatiquement verrouillées et déverrouillées au moyen d'un système de verrouillage central, par manoeuvre d'une serrure, au moyen de serrures actionnées à clé montées dans une paire de portes et le système de verrouillage central étant commandé au moyen d'un premier groupe de contacts de commutation (12) sur les serrures et un accès à l'habitacle du véhicule étant surveillé au moyen d'un système d'alarme antivol, l'état de veille du système d'alarme antivol pouvant être activé au verrouillage et désactivé au déverrouillage par les contacts de commutation du premier groupe (12), et le déclenchement d'une alarme par le système d'alarme antivol en état de veille étant assuré par au moins un contact de commutation, passant de l'état inactif à l'état actif, du groupe des seconds contacts de commutation (13), enregistrant l'accès au véhicule ou son utilisation non autorisée, et l'état de veille du système d'alarme antivol étant indiqué par le clignotement d'un élément d'indication (6) opto-électronique monté dans les boutons de verrouillage, caractérisé en ce que
- le système de verrouillage central et le système d'alarme antivol (1) sont commandés par un appareil de commande (2) commun aux deux systèmes,
- un troisième groupe de contacts de commutation (14) surveille l'état de verrouillage de toutes les serrures ou portes et du capot du coffre à bagages et délivre un signal indiquant l'état de verrouillage,
- l'appareil de commande (2) détermine l'état de fonctionnement du système de verrouillage central par exploitation des signaux du troisième groupe de contacts de commutation (14), et
- si après au moins un actionnement de la clé d'une serrure dans le sens du verrouillage, un contact de commutation au moins du troisième groupe de contacts de commutation (14) ne délivre pas de signal indiquant l'état de verrouillage, l'appareil de commande (2)
- interdit l'activation du système d'alarme (1) et en même temps
- délivre un signal d'alarme approprié, par l'intermédiaire des éléments d'indication (6) opto-électroniques.

2. Véhicule automobile selon la revendication 1, caractérisé en ce qu'après détection d'un signal caractérisant l'état de verrouillage, manquant après au moins une manoeuvre de la clé d'une serrure dans le sens du verrouillage, du contact ou des contacts de commutation du troisième groupe (14), l'activation du système d'alarme est rendue possible par un nombre déterminé de manoeuvres, dans le sens du verrouillage, de la serrure actionnée par une clé à l'intérieur d'un intervalle de temps déterminé, limité, y compris lorsqu'au moins une porte du véhicule est non verrouillée ou non verrouillable ou verrouillée manuellement.

3. Véhicule automobile selon les revendications 1 ou 2, caractérisé en ce qu'après verrouillage manuel de toutes les portes et présence des signaux caractérisant l'état de verrouillage de toutes les portes, du troisième groupe de contacts de manoeuvre (14), l'activation du système d'alarme est rendue possible par manoeuvre de la serrure manoeuvrée à clé dans le sens du verrouillage.

4. Véhicule automobile selon les revendications 1, 2 ou 3, caractérisé en ce qu'après expiration d'un temps de repos, après activation du système d'alarme, un déclenchement de celui-ci est possible par uniquement les contacts de commutation du second groupe (13), qui était inactif pendant tout le temps de repos, tandis que les contacts de commutation actifs peuvent déclencher le système d'alarme seulement après passage à l'état inactif ou après expiration d'un temps de repos, commençant après passage à l'état inactif.

5. Véhicule automobile selon l'une au moins des revendications précédentes, caractérisé en ce que le système d'alarme est désactivé par manoeuvre d'une serrure de contact (10) du véhicule automobile, avant expiration du temps de repos.

6. Véhicule automobile selon l'une au moins des revendications précédentes, caractérisé en ce qu'en manoeuvrant la serrure de contact (10) du véhicule automobile, après expiration du temps de repos, le courant de contact envoyé à un moteur à combustion du véhicule est interrompu (8, 11) et l'alarme est déclenchée.

7. Véhicule automobile selon l'une au moins des revendications précédentes, caractérisé en ce qu'avec la manoeuvre d'une serrure fermant le coffre à bagages du véhicule dans le sens du déverrouillage, un système d'alarme déjà activé reste désactivé au moins aussi longtemps que le contact de commutation correspondant du second groupe (13) est actif.

8. Véhicule automobile selon l'une au moins des revendications précédentes, caractérisé en ce qu'un appareil supplémentaire externe de surveillance du véhicule est commandé de manière à devenir actif, si le système d'alarme est activé et pendant tout le temps de repos pendant lequel tous les contacts de commutation du second groupe (13) étaient inactifs ou si après passage de tous les contacts de commutation du second groupe (13) à l'état inactif, le temps de repos s'est écoulé une nouvelle fois.

9. Véhicule automobile selon l'une au moins des revendications précédentes, caractérisé en ce que l'appareil de commande (2) commun possède une fonction d'autodiagnostic qui, après activation du système d'alarme, vérifie son bon fonctionnement.

10. Véhicule automobile selon la revendication 9, caractérisé en ce que les défauts du système d'alarme et les alarmes déclenchées sont mémorisés dans une mémoire de défauts de l'appareil de commande (2), avec enregistrement des conditions limites.

11. Véhicule automobile selon les revendications 9 ou 10, caractérisé en ce que l'état de fonctionnement du système d'alarme est indiqué par les diodes électroluminescentes des boutons de verrouillage et en ce que pour caractériser l'état de fonctionnement respectif, les éléments d'indication (8) opto-électroniques sont commandés avec des signaux clignotants différents.
